# EUROPÄISCHE PATENTANMELDUNG

(11) **EP 0 698 444 A2**
(43) Veröffentlichungstag der Anmeldung: **28.02.1996**
(21) Anmeldenummer: 95110226.8
(22) Anmeldetag: 30.06.1995
(51) Int. Cl.: B23Q 3/155, B25J 15/04

(54) **Einrichtung zum Übergeben und/oder Übernehmen von Werkzeugen an Roboter-Greiferarmen**

(30) Priorität: 24.08.1994 DE 9413574 U
(71) Anmelder: CARL KURT WALTHER GmbH & Co. KG, D-42327 Wuppertal (DE)
(72) Erfinder: Siebelhoff, Bernd, D-42659 Solingen (DE); Peter, Hans Günter, D-42109 Wuppertal (DE); Niebel, Reinhard, D-42329 Wuppertal (DE)
(74) Vertreter: Rieder, Hans-Joachim, Dr.

(57) **Zusammenfassung**

Einrichtung zum Übergeben und/oder Übernehmen von Werkzeugen, insbesondere in Form von Kupplung-Loshälften (19) zu Kupplungsfesthälften (21) an Roboter-Greifarmen, mit einem von der Festhälfte (21) oder dergleichen anfahrbaren Tisch (7) zur Deponierung der Loshälfte (19), welcher Tisch (7) quer zur Übergabe-Steckrichtung beider über Zentriermittel in Formschluß zueinander tretender Kupplungshälften in seiner Erstreckungsebene beweglich angeordnet ist, und schlägt zur Erzielung einer größeren Genauigkeit beim Übergeben und/oder Übernehmen vor, daß der Tisch (7) zumindest während der Phase der Steckverbindung um den Zentrierhub der Zentriermittel freischwimmend beweglich ist.

## Beschreibung

Die Erfindung bezieht sich auf eine Einrichtung zum Übergeben und/oder Übernehmen von Werkzeugen, insbesondere in Form von Kupplungs-Loshälften zu Kupplungs-Festhälften an Roboter-Greiferarmen, mit einem von der Festhälfte oder dergleichen anfahrbaren Tisch zur Deponierung der Loshälfte, welcher Tisch quer zur Übergabe-Steckrichtung beider über Zentriermittel in Formschluß zueinander tretender Kupplungshälften in seiner Erstreckungsebene beweglich angeordnet ist.

Aus der PCT/GB 83 /00075 ist es bekannt, Ungenauigkeiten des relativ schweren Roboter-Greiferarmes beim Stillsetzen seiner Bewegung dadurch zu begegnen, daß werkzeugseitig eine kreisförmige Platte vorgesehen ist, die ihrerseits in einer horizontalen Ebene in einem durchmessergrößeren Topf angeordnet ist. An der Topfwandung in gleichmäßiger Winkelverteilung vorgesehene Düsen werden bei Verlagerung der kreisförmigen Platte beaufschlagt und gesteuert. Dies überträgt sich auf ebenfalls in der gleichen Winkelverteilung angeordnete Balgeneinheiten, die ihrerseits den Topf in der entsprechenden Richtung verlagern und so ein Zentrieren des plattenseitigen Einsteckzapfens zu einer Aufnahmeöffnung ermöglichen. Eine derartige Steuerung ist herstellungstechnisch sehr aufwendig.

Dem Gegenstand der Erfindung liegt die Aufgabe zugrunde, eine Einrichtung der in Rede stehenden Art so auszugestalten, daß Ungenauigkeiten beim Übergeben und/oder übernehmen von Werkzeugen aufgrund eines nicht genau stillsetzbaren Roboter-Greiferarmes in einfacher Weise kompensierbar sind.

Gelöst wird diese Aufgabe bei einer gattungsgemäßen Einrichtung durch das Kennzeichen des Anspruchs 1.

Die Unteransprüche stellen vorteilhafte Weiterbildungen der erfindungsgemäßen Lösung dar.

Zufolge derartiger Ausgestaltung ist eine Einrichtung angegeben, mittels welcher nach Stillsetzen des Roboter-Greiferarmes, ungeachtet seiner im Rahmen üblicher Toleranzen liegenden Ungenauigkeit das problemlose Übergeben bzw. Übernehmen von Werkzeugen ermöglicht ist. Eine aktive Steuerung, die Werkzeug und Werkzeugaufnahme zueinander ausrichtet, ist nicht erforderlich. Die Kupplungs-Festhälfte sitzt am Roboter-Greiferarm. Mit ihr ist eine Kupplungs-Loshälfte an den Tisch übergebbar. Auch ist das Übernehmen einer Loshälfte vom Tisch möglich. Kupplungs-Loshälfte und Kupplungs-Festhälfte können dabei eine "Multikupplung" bilden. Soll das Übergeben einer Kupplungs-Loshälfte an den Tisch erfolgen, so wird in einer tischüberdeckenden Lage die Roboter-Greifarmbewegung stillgesetzt. Es setzt dann die Steckverbindung ein. Auch wenn aufgrund eines in Toleranzen liegenden ungenauen Stillsetzens keine fluchtende Übereinstimmung von Steckposition und Loshälfte vorliegt, ist dennoch die genaue Übergabe möglich, da während der Phase der Steckverbindung der Tisch seine freie Beweglichkeit um den Zentrierhub der Zentrierungsmittel erhält. Die ungenaue Ausrichtung wird dann durch das Verfahren des Tisches kompensiert, wodurch das endgültige Übergeben der Kupplungs-Loshälfte durchgeführt werden kann, ohne daß hierbei nennenswerte Querkräfte an dem Roboter-Greiferarm wirksam werden. Diese freischwimmende Beweglichkeit läßt ferner im Gegensatz zu bekannten Lösungen ein besonders kurzfristiges Übergeben bzw. Übernehmen der Kupplungs-Loshälfte zu, so daß mit der erfindungsgemäßen Einrichtung ausgerüstete Fertigungsanlagen wirtschaftlicher arbeiten. Das Übergeben bzw. Übernehmen von Werkzeugen kann zeitgesteuert erfolgen oder reparaturabhängig sein. Es erweist sich dabei eine vom Greiferarm bzw. von der an ihm angeordneten Kupplungs-Festhälfte gesteuerte Freigabe der freischwimmenden Beweglichkeit des Tisches aus einer Festposition desselben von Vorteil, welche als Mittelstellung aller freischwimmend erreichbaren Verschiebberichtungen des Tisches ausgebildet ist. Einhergehend mit der Herbeiführung der Steckverbindung verursacht die Kupplungs-Festhälfte die Freigabe des Tisches aus seiner Festposition. Das bedeutet, daß keine Addition der Abweichmaße von Tisch und Werkzeug auftritt, sondern nur die Abweichung des Werkzeuges zur Festposition bzw. Mittelstellung zu berücksichtigen ist. Ausgehend nach Freigabe der freischwimmenden Beweglichkeit kann sich der Tisch freischwimmend so verlagern, daß die bestimmungsgemäße Fluchtposition herbeiführbar ist. Ist das Übernehmen einer Kupplungs-Loshälfte vom Tisch erwünscht, so setzt vorerst der Roboter-Greiferarm mit der an ihm sitzenden Kupplungs-Festhälfte oberhalb der betreffenden Kupplungs-Loshälfte still. Liegt nicht die fluchtende Ausrichtung zwischen diesen beiden Kupplungs-Hälften vor und wird dennoch die Kupplungs-Festhälfte in Steckverbindung zur Kupplungs-Loshälfte gebracht, so erfolgt einhergehend von der Kupplungs-Festhälfte die gesteuerte Freigabe des Tisches. Der kann sich aus seiner Festposition bzw. aus der vorliegenden Mittelstellung freischwimmend verlagern, so daß die fluchtende Ausrichtung dieser beiden Kupplungsteile herbeiführbar ist. Bautechnische Vorteile ergeben sich, den Tisch oberhalb einer ortsfesten Auflagerplatte anzuordnen, von welcher greiferarmgesteuert Fesselungszapfen ausgehen, die in Fesselungsöffnungen des Tisches ein- bzw. ausfahren. Wird mittels des Roboter-Greiferarmes die Kupplungs-Festhälfte mit der daran sitzenden Kupplungs-Loshälfte in Übergabestellung zum Tisch gebracht und in Richtung desselben abgesenkt, so werden, von der Kupplungs-Festhälfte gesteuert, die Fesselungszapfen verlagert, die die ihnen zugeordneten Fesselungsöffnungen des Tisches verlassen. Verläßt die Kupplungs-Festhälfte ihre Kupplungsposition zur Kupplungs-Loshälfte durch Zurückfahren, treten die Fesselungszapfen wieder in die Fesselungsöffnungen des Tisches ein und justieren diesen. Die Einsteuerbewegung der Fesselungszapfen ist dabei durch die Einlaufschrägen erleichtert. Im Detail sind die Fesselungszapfen so beschaffen, daß der querschnittsverjüngte Bereich der Einlaufschrägen Anschläge bildet zur Begrenzung der freischwimmenden Beweglichkeit des Tisches. Somit verläßt der Fesselungszapfen niemals vollständig seinen Eingriff zur Fesselungsöffnung. Ausschließlich in zurückverlagerter Stellung ragt der Fesselungszapfen mit seinem querschnittsverjüngten Bereich in die Fesselungsöffnung hinein und begrenzt dadurch die freischwimmende Beweglichkeit des Tisches. Durch Anordnung des Tisches auf Kugeln der Auflagerplatte werden bei einem Bewegen des Tisches, auch wenn er beladen ist, nur geringe Kräfte erforderlich. Lagestabilisierend wirkt sich für den Tisch die Maßnahme aus, daß die Auflagerplatte mit den Tisch frei durchdringenden Säulen ausgestattet ist, die ein Kopfstück tragen, welches die Oberseite des Tisches fesselnd übergreift. Somit ist der Tisch auch in Aufwärtsrichtung gesichert. Als optimal erweist es sich dabei, daß der fesselnde Übergriff unter Zwischenlage einer Kugel gegeben ist. Aufgenommen ist die Kugel von dem vorgenannten Kopfstück. Eine Möglichkeit, ein Werkzeug-Wechselsystem zu verwirklichen, besteht darin, daß der Tisch zwei diametral gegenüberliegende Stationen zur Übergabe und/oder Übernahme der Werkzeuge besitzt. Die eine Station dient dann zum Absetzen eines beispielsweise zu wartenden Werkzeuges, während die andere Station ein einsatzbereites Werkzeug aufnimmt. In die vorgenannten Stationen werden die Werkzeuge durch Zentriermittel gebracht. Diese befinden sich am Rand des Tisches und sind derart angeordnet, daß bei eingesteckter Position der Kupplungs-Loshälfte deren Fläche freifliegend über die Tischrandkante ausladet. Auch ist die Anordnung der Zentrierzapfen derart getroffen, daß deren Verbindungslinie tischseitig oder durch den Schwerpunkt der Kupplungs-Loshälfte verläuft. Aufgrund der Schwerkraft regelt sich die bestimmungsgemäße Position der Kupplungs-Loshälfte nach Übergeben stets ein. Ein unterhalb des Tisches vorgesehenes Stützlager gestattet dabei die Anlage eines Abstützabschnittes der Kupplungs-Loshälfte und fängt demgemäß die Kippmomente der Kupplungs-Loshälfte auf. Damit auch während der freischwimmenden Beweglichkeit eine unveränderte Abstützung der Kupplungs-Loshälfte gewährleistet ist, ist das Stützlager Bauteil des Tisches. Im Detail sieht dies so aus, daß von der Unterseite des Tisches ein vertikal gerichteter Stützlager-Träger ausgeht. Dieser durchsetzt die Auflagerplatte und trägt unterhalb derselben einen querausladenden Arm mit an dessen Ende sitzendem Stützlager. In vorteilhafter Weise ist dieses als Rollkörper gestaltet, der um eine Achse parallel zur Ebene der freischwimmenden Beweglichkeit des Tisches bewegbar ist. Für ein genaues Justieren der Werkzeuge ist vorgesehen, daß der Aufleger längen- und /oder höheneinstellbar ist. Eine weitgehend versteckte Anordnung erhält der Stützlagerträger dadurch, daß er im Inneren eines die Auflagerplatte tragenden Fußes angeordnet ist. Zwischen Stützlagerträger und Fuß ist ein Spiel vorgesehen, welches gleichgroß oder größer ist als der Zentrierhub der Zentrierungsmittel. Für eine raumsparende Bauform trägt die Tatsache bei, die Zentrierzapfen an den Eckpunkten der Tischrandkante zum Rand einer Tischaussparung anzuordnen. Die Tischaussparung gestattet dabei auch den Eintritt des Abstütz-Abschnittes der Kupplungs-Loshälfte. Eine Möglichkeit, die Tisch-Fesselungsmittel in die Freigabestellung zu bringen, besteht darin, daß der Tisch quer zu seiner schwimmenden Beweglichkeit von der Oberseite her beaufschlagbare Aktivierungsglieder trägt, deren Unterseite in der Festposition des Tisches oberhalb von Schaltgliedern sitzt, welche zur Steuerung der Tisch-Fesselungsmittel dienen. Bezüglich der Aktivierungsglieder kann es sich dabei um die Tisch-Oberseite überragende, federnd abgestützte Zapfen handeln. Werden diese beim Absenken des Werkzeugs beaufschlagt, so erfolgt einhergehend die Betätigung der Schaltglieder. Diese können beispielsweise pneumatisch gesteuerte Tisch-Fesselungsmittel aus ihrer Sperrstellung zurückziehen. Schießlich ist es noch von Vorteil, einen Kontrollschalter für die vollendete Steckposition zwischen Tisch und Kupplungs-Loshälfte vorzusehen.

Nachstehend wird ein Ausführungsbeispiel der Erfindung anhand der Zeichnungen erläutert. Es zeigt:
- Fig. 1: eine Draufsicht auf die Einrichtung bei teilweise weggebrochenem Tisch mit strichpunktiert angedeuteten Kupplungs-Loshälften,
- Fig. 2: teils in Ansicht, teils im Längsschnitt die Einrichtung und
- Fig. 3: den Schnitt nach der Linie III-III in Figur 1.

Die einer nicht veranschaulichten Fertigungsstraße zugeordnete Einrichtung besitzt eine im Grundriß H-förmig gestaltete Auflagerplatte 1. Gebildet ist die H-Form durch von den schmaleren Plattenrandkanten ausgehenden Aussparungen 2, welche zwischen sich einen Steg 3 belassen. Von der Mitte des Steges 3 geht abwärts gerichtet ein als Vierkantrohr gestalteter Fuß 4 aus mit unterseitiger Fußplatte 5. Dieselbe erlaubt es, die Einrichtung an einer mit 6 bezeichneten Montagefläche festzulegen.

Parallel zur Auflagerplatte 1 erstreckt sich oberhalb derselben ein plattenförmiger Tisch 7. Dieser ist weitgehend identisch dem Grundriß der Auflagerplatte 1 angepaßt, also ebenfalls in H-Form erstellt. Dort sind von den schmalen Rändern des Tisches ausgehende Tischaussparungen 8 vorgesehen unter Bildung eines Tisch-Quersteges 9. Abwärts gerichtet geht von der Mitte desselben ein rohrförmiger Stützlagerträger 10 aus. Dieser durchsetzt mit Spiel die Auflagerplatte 1 und taucht in das Innere des Fußes 4 ein.

In parallelem Abstand wird der Tisch 7 zur horizontal ausgerichteten Auflagerplatte 1 durch Kugeln 11 gehalten. Getragen sind diese von auf der Oberseite der Auflagerplatte 1 befestigten Gehäusen 12. Die Kugeln 11 stützten sich ab an die Tischunterseite überragenden, im Grundriß kreisförmigen Laufplatten 13, die über nicht näher veranschaulichte Zapfenabschnitte mit dem Tisch 7 verbunden sind. Ferner gehen von jedem H-Schenkel auf Höhe des Steges 3 der Auflagerplatte 1 drei auf einer Kreislinie angeordnete Säulen 14 aus, welche mit Bewegungsspiel Bohrungen 15 des Tisches 7 durchdringen und oberhalb des Tisches 7 ein Kopfstück 16 tragen. Letzteres dient zur Aufnahme einer Kugel 17, welche sich auf einer die Oberseite des Tisches 7 überragenden Laufplatte 18 abstützt. Somit ist ein Abheben des Tisches 7 verhindert.

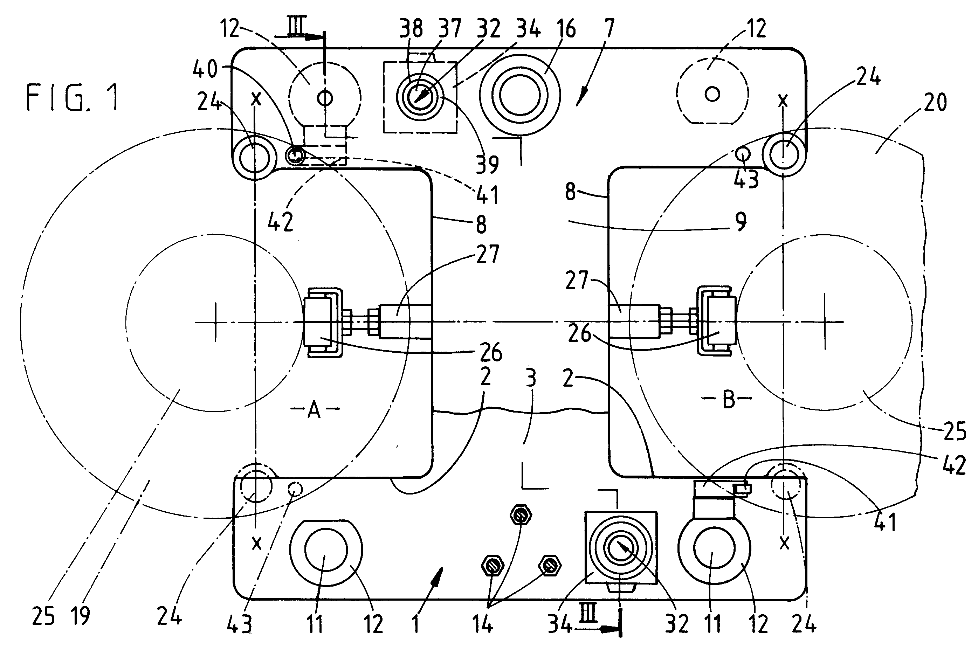

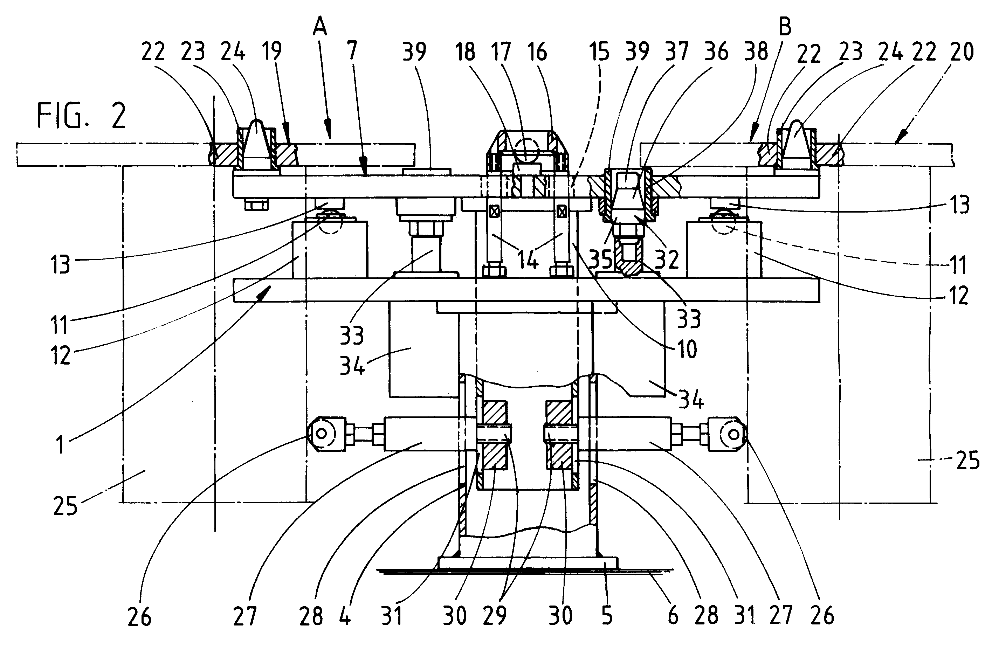

Der Tisch 7 ist jenseits seiner Querachse mit zwei sich diametral gegenüberliegenden Stationen A und B zur Übergabe und/Übernahme der Werkzeuge 19, 20 versehen. Beim Ausführungsbeispiel handelt es sich bezüglich der Station A um die Übergabestation und bezüglich der Station B um die Übernahmestation. Die mit 19,20 bezeichneten Werkzeuge sind die Loshälften, die an eine Festhälfte 21 eines nicht veranschaulichten Roboter-Greiferarmes andockbar sind. Jede Loshälfte 19,20 besitzt einen scheibenförmigen Träger 22, welcher auf einer tischseitigen, sekantenartig verlaufenden Verbindungslinie x-x mit zwei Steckhülsen 23 versehen ist. Dieselben wirken zusammen mit als Zentrierzapfen 24 gestalteten Zentriermitteln, die ihrerseits an den quer verlaufenden Rändern des Tisches 7 befestigt sind. Demgemäß verläuft die Verbindungslinie x-x auch tischseitig der Kupplungsloshälfte 19,20. Aus Figur 1 und 2 ist ersichtlich, daß die Anordnung der Zentrierzapfen 24 es bewirkt, daß bei eingesteckter Position der Kupplungs-Loshälften 19,20 deren Fläche freifliegend über die schmalseitige Tischrandkante ausladet. Im übrigen sind die Zentrierzapfen 24 , wie es insbesondere aus Figur 1 zu entnehmen ist, an den Eckpunkten der Tischrandkante zum Rand der Tischaussparung 8 angeordnet. Bezüglich der Zentrierzapfen 24 handelt es sich um Zapfen mit kegelförmigen Endabschnitten .

Abwärtsgerichtet geht von der Loshälfte 19,20 ein Abstützabschnitt 25 aus, der aufgrund der Anordnung der Steckhülsen 23 auf einer sekantenförmigen Verbindungslinie schwerkraftbedingt ein Kippen der Werkzeuge 19,20 erzwingt. Aufgefangen werden die Kippmomente durch ein unterhalb des Tisches 7 vorgesehenes Stützlager 26, welches von dem Abstütz-Abschnitt 25 beaufschlagt wird. Das Stützlager 26 ist Bauteil des Tisches 7. Beim Ausführungsbeispiel befinden sich in diametraler Gegenüberlage zwei Stützlager 26, die ihrerseits an quer ausladenden Armen 27 sitzen. Jeder Arm 27 durchgreift einen Längsschlitz 28 des Fußes 4 und ragt mit seinem stufenförmig abgesetzten Gewindezapfen 29 in den Innenraum des Stützlagerträgers 10 hinein. Die Gewindezapfen 29 sind ihrerseits in Muttern 30 eingeschraubt, die gegen die betreffende Innenfläche des vierkantförmigen Stützlagerträgers 10 verspannt sind. Da die Gewindezapfen 29 vertikal ausgerichtete Längsöffnungen 31 durchgreifen, ist es nach Lösen der Verspannung möglich, eine Höhenverstellung der quer ausladenden Arme 27 vorzusehen. Das freie Ende jedes Armes 27 ist über eine nicht näher veranschaulichten Gewindeverstellung in Achsrichtung verstellbar, verbunden mit einer Längeneinstellbarkeit des Stützlagers 26. Dieses ist als Rollkörper gestaltet, welcher um eine Achse parallel zur Ebene einer freischwimmenden Beweglichkeit des Tisches 7 drehbar ist.

Zur Fesselung des Tisches 7 dienen zwei etwa diametral sich gegenüberliegende Fesselungszapfen 32. Jeder Fesselungszapfen 32 sitzt an dem freien Ende eines Kolbens 33 eines Pneumatikzylinders 34. Sodann setzt sich der Fesselungszapfen 32 aus drei Abschnitten 35, 36 und 37 zusammen. Der Abschnitt 35 ist dem Durchmesser einer Fesselungsöffnung 38 des Tisches 7 angepaßt. Gebildet wird die Fesselungsöffnung 38 von einer in den Tisch 7 eingesetzten Hülse 39. Der endständige Abschnitt 37 des Fesselungszapfens 32 ist dagegen durchmesserkleiner. Der zwischen den beiden äußeren Abschnitten 35,37 befindliche Abschnitt 36 verläuft dagegen kegelstumpfförmig und bildet Einlaufschrägen.

Weiterhin ist der Tisch 7 im Bereich jeder Station A,B mit einem Aktivierungsglied 40 versehen. Dies ist ein abgefederter, die Tischoberseite überragender Zapfen, dessen Unterseite in der von den Fesselungszapfen 32 gesicherten Stellung des Tisches 7 oberhalb von Schaltgliedern 41 sitzt. Diese sind Bestandteil je eines Schalters 42. Durch Betätigung desselben erhalten die Pneumatikzylinder 34 den Impuls, ihre Kolben 33 mit den daran sitzenden Fesselungszapfen 32 aus der Fesselungsstellung zurückzuziehen.

Sodann ist in Gegenüberlage zu jedem Aktivierungsglied 40 je ein Kontrollschalter 43 vorgesehen, welcher die vollendete Steckposition zwischen Tisch 7 und Kupplungs-Loshälfte 19,20 registriert.

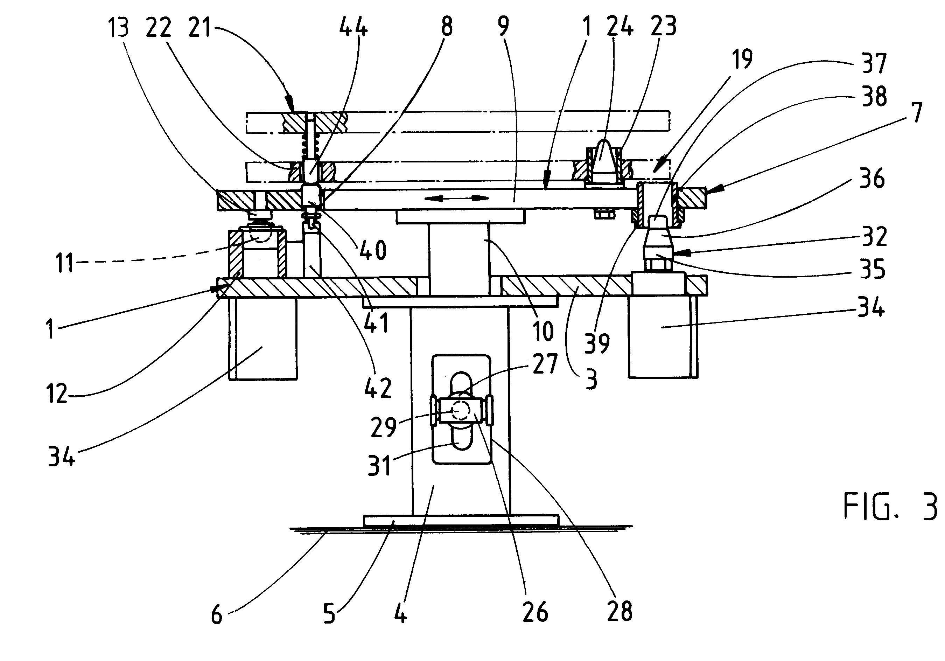

Es stellt sich folgende Wirkungsweise ein:
Beim Ausführungsbeispiel wird angenommen, daß die Station B mit einem einsatzbereiten Werkzeug (Loshälfte 20) belegt ist, während die andere Station, in diesem Falle die Übernahmestation A unbelegt ist. Führt nun der nicht veranschaulichte Roboter-Greiferarm mit der daran sitzenden Festhälfte 21 zeit- bzw. reparaturabhängig eine Loshälfte 19 zu, kann der Fall eintreten, daß der Roboter-Greiferarm in einer solchen Stellung stillsetzt, in der keine fluchtende Übereinstimmung der Zentrierzapfen 24 des Tisches 7 zu den Steckhülsen 23 der Loshälfte 19 vorliegt. Es kann dennoch die Steckverbindung, ausgeführt vom Roboter-Greiferarm, vorgenommen werden. Während dieses Vorganges beaufschlagt die Festhälfte 21 mit einem ihn unterseitig überragenden, abgefederten Finger 44, welcher auch die Loshälfte 19 durchgreift, das in Gegenrichtung abgefederte Aktivierungsglied 40 des Tisches 7. Das Aktivierungsglied 40 verlagert sich demgemäß in Abwärtsrichtung und betätigt das Schaltglied 41 des Schalters 42, woraufhin beide Pneumatikzylinder 34 befehlsmäßig über die Kolben 33 die Fesselungszapfen 32 in die Position gemäß Figur 3 zurückziehen. Dann ragt ausschließlich der qurschnittsverjüngte Bereich bzw. Abschnitt 37 des Fesselungszapfens 32 in die Fesselungsöffnung 38 der tischplattenseitigen Hülse 39 hinein unter Erzielung einer freischwimmenden Beweglichkeit des Tisches 7 im Rahmen des zwischen Fesselungsöffnung 38 und Abschnitt 37 vorliegenden Spieles. Aus der zuvor vom Tisch 7 eingenommenen Festposition bzw. Mittelstellung kann der Tisch in jede beliebige Richtung verlagert werden bedingt durch den Eintritt der Zentrierzapfen 24 in die Steckhülsen 23. Nach erfolgter Übergabe des Werkzeuges 19 bzw. der Loshälfte wird die Verbindung zwischen Festhälfte 21 und Loshälfte 19 gelöst bei gleichzeitigem Abheben der Festhälfte bzw. des Roboter-Greiferarmes. Das Aktivierungsglied 40 kann sich zurückverlagern, was vom Schalter 42 registriert wird , woraufhin die Fesselungszapfen 32 über die Pneumatikzylinder 34 in die Fessellungsstellung gemäß Figur 2 vorsteuern und damit die freischwimmende Beweglichkeit des Tisches eliminieren.

Das übergebene Werkzeug, Loshälfte 19, tritt aufgrund der Schwerkraft mit seinem Abstütz-Abschnitt 25 gegen das Stützlager 26, so daß insgesamt eine Dreipunktabstützung des Werkzeuges 19 vorliegt, nämlich an den beiden Zentrierzapfen 24 und dem Stützlager 26.

Es kann nun das einsatzbereite Werkzeug 20 vom Roboter-Greiferarm angefahren werden. Nach Stillsetzen der Anfahrbewegung und Absenken der Festhälfte 21 beaufschlagt der Finger 44 das Aktivierungsglied 40. Durch diesen wird der Schalter 42 betätigt, so daß die Fessselungszapfen 32 abwärts steuern und den Tisch 7 zur schwimmenden Beweglichkeit freigeben, wodurch das behinderungsfreie Andocken der Loshälfte 20 an die Festhälfte 21 gewährleistet ist. Es kann dann das Abheben des Roboter-Greiferarmes mit der daran sitzenden Festhälfte 21 und der mit dieser gekuppelten Loshälfte 20 vorgenommen werden. Danach kann die für den Bearbeitungsprozeß nicht mehr geeignete Loshälfte 19 auf geeignete Weise entfernt werden. Dann ist eine einsatzbereite Loshälfte an der Station B vorzusehen, so daß sich der vorgeschilderte Vorgang wiederholen läßt.

Es wäre auch möglich, eine einsatzbereite Loshälfte an der Station A vorzusehen, so daß dann dort die Übernahme erfolgt, während an der Station B die Übergabe einer nicht näher bearbeitungsprozeßgeeigneten Kupplungshälfte vorzunehmen ist.

Anstatt die freischwimmende Beweglichkeit durch das Außerwirkungbringen eines Formschlusses zu erhalten, wäre es auch möglich, die Fesselung des Tisches auf elektromagnetischem Weg zu erzeugen, welche Fesselung zumindest während der Phase der Steckverbindung durch Ausschalten des Magnetfeldes aufgehoben wird.

Eine weitere Variation könnte darin bestehen, den Tisch mit mehr als zwei Stationen, beispielsweise vier Stationen zu gestalten, die taktgeschaltet, nacheinander in die entsprechende Position gebracht werden.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Einrichtung zum Übergeben und/oder Übernehmen von Werkzeugen, insbesondere in Form von Kupplungs-Loshälften (19,20) zu Kupplungsfesthälften (21) an Roboter-Greiferarmen, mit einem von der Festhälfte (21) oder dergleichen anfahrbaren Tisch (7) zur Deponierung der Loshälfte (19,20), welcher Tisch (7) quer zur Übergabe-Steckrichtung beider über Zentriermittel in Formschluß zueinander tretender Kupplungshälften in seiner Erstreckungsebene beweglich angeordnet ist, dadurch gekennzeichnet, daß der Tisch (7) zumindest während der Phase der Steckverbindung um den Zentrierhub der Zentrierungsmittel freischwimmend beweglich ist.

2. Einrichtung nach Anspruch 1 oder insbesondere danach, gekennzeichnet durch eine vom Greiferarm bzw. von der an ihm angeordneten Kupplungs-Festhälfte (21) gesteuerte Freigabe der freischwimmenden Beweglichkeit des Tisches (7) aus einer Festposition desselben, welche als Mittelstellung aller freischwimmend erreichbaren Verschieberichtungen des Tisches ausgebildet ist.

3. Einrichtung nach einem oder mehreren der vorhergehenden Ansprüche oder insbesondere danach, dadurch gekennzeichnet, daß der Tisch (7) oberhalb einer ortsfesten Auflagerplatte (1) angeordnet ist, von welcher greiferarmgesteuert Fesselungszapfen (32) ausgehen, die in Fesselungsöffnungen (38) des Tisches (7) ein- bzw. ausfahren.

4. Einrichtung nach einem oder mehreren der vorhergehenden Ansprüche oder insbesondere danach, dadurch gekennzeichnet, daß die Fesselungszapfen (32) mit Einlaufschrägen (kegelstumpfförmige Abschnitte 36) ausgestattet sind.

5. Einrichtung nach einem oder mehreren der vorhergehenden Ansprüche oder insbesondere danach, dadurch gekennzeichnet, daß der querschnittsverjüngte Bereich (Abschnitt 37) der Einlaufschrägen Anschläge bildet zur Begrenzung der freischwimmenden Beweglichkeit des Tisches (7).

6. Einrichtung nach einem oder mehreren der vorhergehenden Ansprüche oder insbesondere danach, dadurch gekennzeichnet, daß der Tisch (7) auf Kugeln (11) der Auflagerplatte (1) ruht.

7. Einrichtung nach einem oder mehreren der vorhergehenden Ansprüche oder insbesondere danach, dadurch gekennzeichnet, daß die Auflagerplatte (1) mit den Tisch (7) frei durchdringenden Säulen (14) ausgestattet ist, die ein Kopfstück (16) tragen, welches die Oberseite des Tisches (7) fesselnd übergreift.

8. Einrichtung nach einem oder mehreren der vorhergehenden Ansprüche oder insbesondere danach, dadurch gekennzeichnet, daß der fesselnde Übergriff unter Zwischenlage einer Kugel (17) gegeben ist.

9. Einrichtung nach einem oder mehreren der vorhergehenden Ansprüche oder insbesondere danach, dadurch gekennzeichnet, daß der Tisch (7) zwei diametral gegenüberliegende Stationen (A,B) zur Übergabe und/oder Übernahme der Werkzeuge (19,20) besitzt.

10. Einrichtung nach einem oder mehreren der vorhergehenden Ansprüche oder insbesondere danach, dadurch gekennzeichnet, daß die Zentriermittel (Zentrierzapfen 24) am Rand des Tisches (7) derart angeordnet sind, daß bei eingesteckter Position der Kupplungs-Loshälfte (19,20) deren Fläche freifliegend über die Tischrandkante ausladet.

11. Einrichtung nach einem oder mehreren der vorhergehenden Ansprüche oder insbesondere danach, dadurch gekennzeichnet, daß die Zentrierzapfen (24) derart angeordnet sind, daß deren Verbindungslinie (x-x) tischseitig oder durch den Schwerpunkt der Kupplungs-Loshälfte (20,19) verläuft.

12. Einrichtung nach einem oder mehreren der vorhergehenden Ansprüche oder insbesondere danach, gekennzeichnet durch ein unterhalb des Tisches (7) vorgesehenes Stützlager (26) für einen Abstütz-Abschnitt (25) der Kupplungs-Loshälfte (19,20) zum Auffangen der Kippmomente der Kupplungs-Loshälfte (19,20).

13. Einrichtung nach einem oder mehreren der vorhergehenden Ansprüche oder insbesondere danach, dadurch gekennzeichnet, daß das Stützlager (26) Bauteil des Tisches (7) ist.

14. Einrichtung nach einem oder mehreren der vorhergehenden Ansprüche oder insbesondere danach, gekennzeichnet durch einen Stützlager-Träger (10), welcher von der Unterseite des Tisches (7) ausgeht, die Auflagerplatte (1) durchsetzt und unterhalb der Auflagerplatte (1) in einen ausladenden Arm (27) übergeht, an dessen Ende das Stützlager (26) sitzt.

15. Einrichtung nach einem oder mehreren der vorhergehenden Ansprüche oder insbesondere danach, dadurch gekennzeichnet, daß das Stützlager (26) als Rollkörper gestaltet ist, der um eine Achse parallel zur Ebene der freischwimmenden Beweglichkeit des Tisches (7) bewegbar ist.

16. Einrichtung nach einem oder mehreren der vorhergehenden Ansprüche oder insbesondere danach, dadurch gekennzeichnet, daß der ausladende Arm (27) längen- und/oder höheneinstellbar ist.

17. Einrichtung nach einem oder mehreren der vorhergehenden Ansprüche oder insbesondere danach, dadurch gekennzeichnet, daß der Stützlagerträger (10) im Inneren eines die Auflagerplatte (1) tragenden Fußes (4) angeordnet ist.

18. Einrichtung nach einem oder mehreren der vorhergehenden Ansprüche oder insbesondere danach, dadurch gekennzeichnet, daß die Zentrierzapfen (24) an den Eckpunkten der Tischrandkante zum Rand einer Tischaussparung (8) angeordnet sind.

19. Einrichtung nach einem oder mehreren der vorhergehenden Ansprüche oder insbesondere danach, dadurch gekennzeichnet, daß der Tisch (7) quer zu seiner schwimmenden Beweglichkeit von der Oberseite her beaufschlagbare Aktivierungsglieder (40) trägt, deren Unterseite in der Festposition des Tisches (7) oberhalb von Schaltgliedern (41) sitzt, welche zur Steuerung der Tisch-Fesselungsmittel (Fesselungszapfen 32) dienen.

20. Einrichtung nach einem oder mehreren der vorhergehenden Ansprüche oder insbesondere danach, gekennzeichnet durch einen Kontrollschalter (43) für die vollendete Steckposition zwischen Tisch (7) und Kupplungs-Loshälfte (19,20).
